# EUROPEAN PATENT APPLICATION

(11) **EP 2 112 404 A1**
(43) Date of publication of application: **28.10.2009**
(21) Application number: 08425291.5
(22) Date of filing: 24.04.2008
(51) Int. Cl.: F16H 55/18, F16D 3/78, F16D 1/08, F16D 3/12

(54) **A device for eliminating backlash in a reducer**

(71) Applicant: Bonfiglioli Riduttori S.p.A., 40012 Calderara di Reno (IT)
(72) Inventor: Cognigni, Enzo, 40129 Bologna (IT)
(74) Representative: Bergadano, Mirko

(57) **Abstract**

A device (20) for eliminating backlash in a reducer (10). The device (20) includes:
- a bushing (24) adapted to be made integral with a toothed wheel (R1) keyed onto a shaft (SH2); the bushing (24) being fixed to an elastic member (28);
- a hub (30), also fixed to the elastic member (28), adapted to rotate with respect to the bushing (24) so as to elastically pre-load the elastic member (28); and
- at least one locking means (VF, LNG2) for the angular position of the hub (30) with respect to that of the bushing (24).

## Description

The present invention relates to a device for eliminating backlash in a reducer, specifically an angular reducer.

Furthermore, the angular reducer is included in a gearmotor to which an electric motor arranged 'upstream' of the angular reducer itself also belongs.

In such type reducers nearly all the pinions and toothed wheels used in the various reduction stages are force fitted onto the corresponding shafts.

We can say that the 'sensitive' point (as regards backlash, vibrations and the machining inaccuracies which derive therefrom) of the motion transmission chain which goes from the electric motor to an output shaft can be limited to the coupling between a input toothed wheel in the reducer and the corresponding shaft.

Indeed, in such a coupling, a tongue is currently inserted into a corresponding cavity made on the input shaft and in a corresponding cavity provided in a through hole of a hub of the toothed wheel.

However, as known, the coupling by means of a tongue between any toothed wheel and a corresponding shaft does not ensure the required absence of backlash between the two elements.

On the other hand, in this case, it is not possible to resort to a force fitting also between the input toothed wheel and the corresponding shaft because in marketing practice there is the need to easily disassemble the input toothed wheel to possibly replace it with another toothed wheel adapted to achieve a new transmission ratio in a first reduction stage.

The present invention thus aims to eliminate the backlash between a toothed wheel and the shaft onto which it is keyed, backlash which, especially in case of precision gearmotors, causes many problems.

Furthermore, the device object of the present invention ensures at the same time an easy assembly/disassembly of the toothed wheel onto/from the corresponding shaft, to obtain the required transmission ratio in the first transmission stage according to the customer's needs.

According to the present invention, a device for eliminating backlash in a reducer, specifically in an angular reducer, is thus made according to the appended claims.

The present invention will now be described with reference to the accompanying drawings (which are not to scale), which show a non-limitative embodiment thereof, in which:
- figure 1 shows a first section of a traditional angular reducer with a device for eliminating backlash according to the present invention applied thereto;
- figure 2 shows a second section Z-Z of the traditional angular reducer in figure 1;
- figure 3 shows the device object of the present invention mounted on a traditional angular reducer as shown in figures 1, 2;
- figure 4 shows an exploded view of the device of figure 3 and some elements belonging to the traditional angular reducer in figures 1, 2;
- figure 5 shows a front view of a toothed wheel with the device in figures 3, 4 applied thereto;
- figure 6 shows a section A-A on the toothed wheel in figure 5;
- figure 7 shows a front view of a first element included in the device according to figures 3, 4;
- figure 8 shows a section B-B on the first element in figure 7;
- figure 9 shows a front view of a second element included in the device according to figures 3, 4;
- figure 10 shows a section C-C on the second element in figure 9;
- figure 11 shows a front view of a third element included in the device according to figures 3, 4;
- figure 12 shows a section D-D on the third element in figure 11;
- figure 13 shows a side view of a fourth element included in the device according to figures 3, 4;
- figure 14 shows a first exploded view of a second embodiment of the device for eliminating backlash object of the present invention;
- figure 15 shows a second exploded view of the second embodiment in figure 14; and
- figure 16 shows a three-dimensional view of the device shown in figures 14, 15 mounted on a gearmotor.

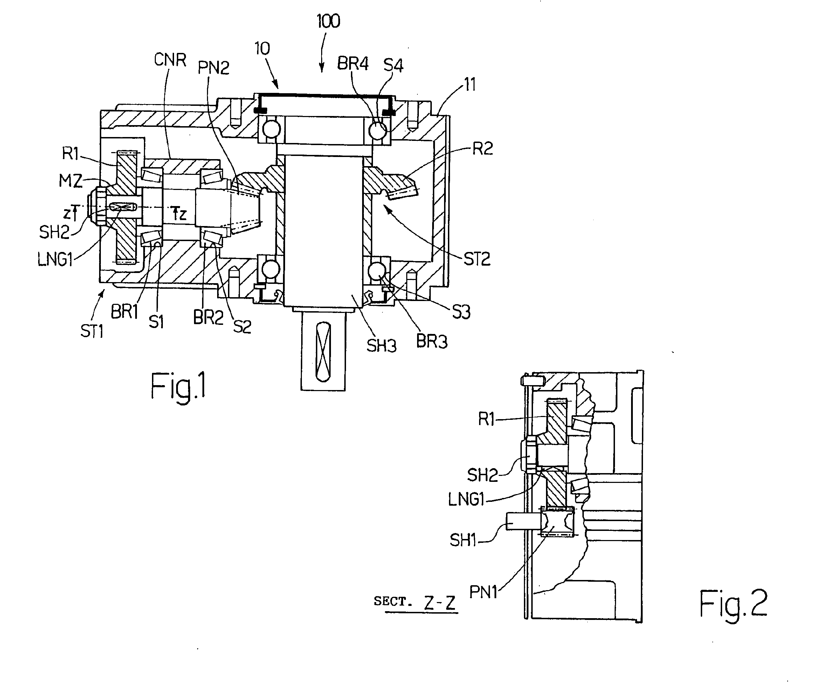

In figures 1, 2, numeral 10 indicates as a whole an angular reducer of a known type.

The angular reducer 10 is included in a gearmotor 100 to which an electric motor (not shown) arranged 'upstream' of the angular reducer 10 itself also belongs.

The angular reducer 10 includes a casing 11 in which there is a first reduction stage ST1 followed by a second reduction stage ST2.

The first reduction stage ST1 includes, in a known manner, a cylindrical pinion PN1 (figure 2) in which the teeth mesh with those of a cylindrical toothed wheel R1 with straight teeth (figure 1, 2).

The cylindrical pinion PN1 is interference fitted on a shaft SH1 (figure 1) while the cylindrical toothed wheel R1 is interference fitted onto a shaft SH2 supported by two bearings BR1, BR2 (figure 2). Each bearing BR1, BR2 is accommodated in a corresponding seat S1, S2; the seats are in a sleeve CNR which have been cast along with the casing 11.

On the opposite end of the shaft SH2, with respect to the toothed wheel R1, there is a bevel pinion PN2 integrally obtained with the shaft SH2 itself.

The bevel pinion PN2 is coupled with a crown gear R2 and forms the mentioned second reduction stage ST2.

The crown gear R2, in turn, is interference fitted onto a shaft SH3 supported by two bearings BR3, BR4.

Each bearing BR3, BR4 is accommodated in a corresponding seat S3, S4 directly obtained on the casing 11.

A force fitting is provided between the pinion PN1 and the corresponding shaft SH1 (figure 1), the same for the bevel pinion PN2 and the shaft SH2 (figure 2), and for the crown gear R2 and the shaft SH3 (figure 2).

Therefore, as all the other elements are force fitted onto the corresponding shafts, we can say that the 'sensitive' point (as regards to backlash, vibrations and the machining inaccuracies which derive therefrom) of the motion transmission chain which goes from the electric motor (not shown) to the output consisting of the shaft SH3 can be limited to the coupling between the toothed wheel R1 and the corresponding shaft SH2.

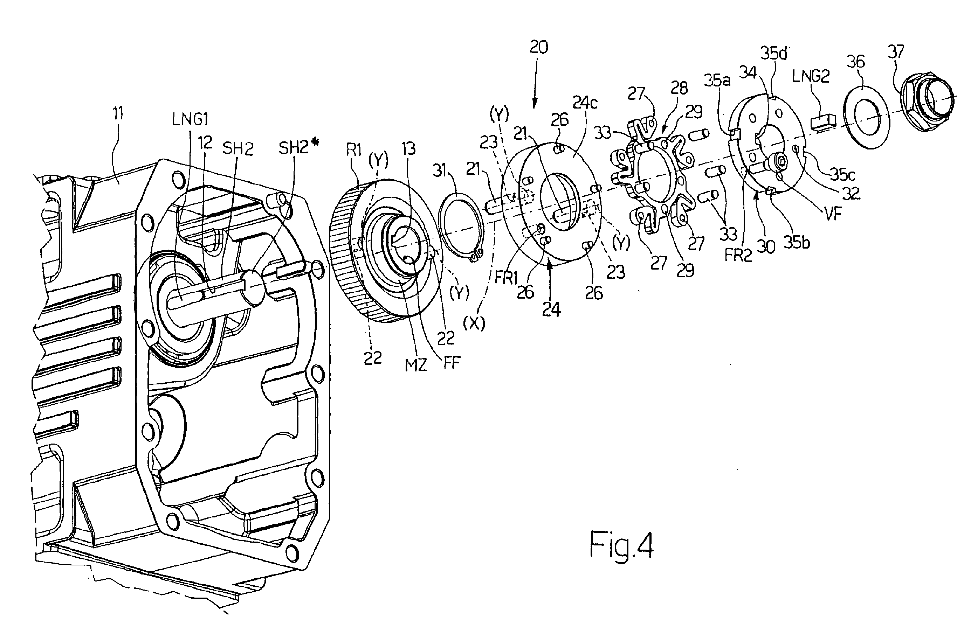

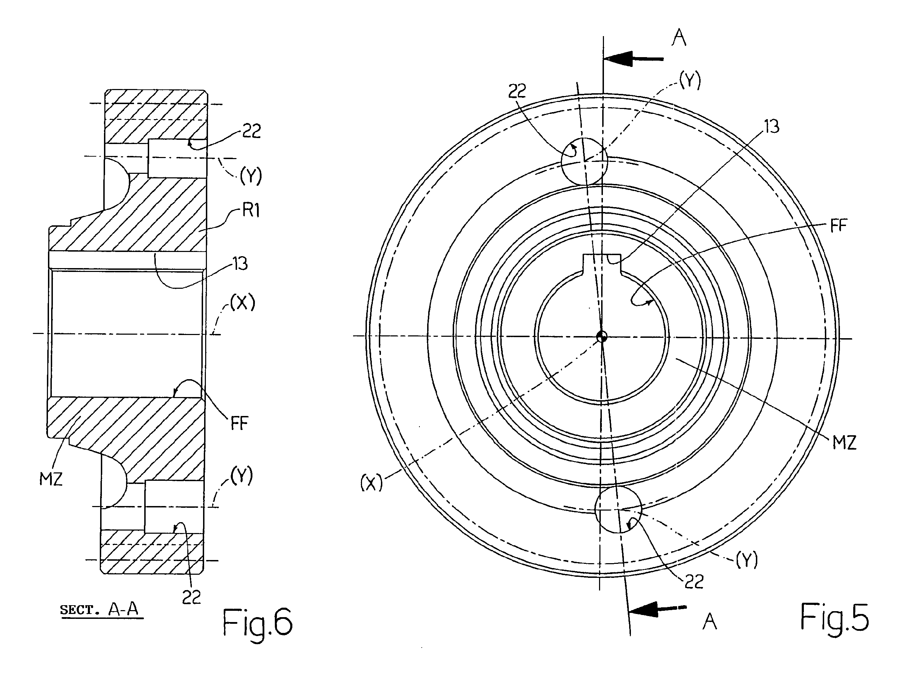

Indeed, in such a coupling, a tongue LNG1 is currently inserted into a corresponding cavity 12 (figure 4) made on the shaft SH2 and in a corresponding cavity 13 (figures 5, 6) provided in a through hole FF of a hub MZ of the toothed wheel R1.

As known, the coupling by means of a tongue between any toothed wheel and a corresponding shaft does not ensure the required absence of backlash between the two elements.

On the other hand, it is not possible to resort to a force fitting also between the toothed wheel R1 and the shaft SH2 because, in marketing and industrial practice, there is the need to easily disassemble the toothed wheel R1 to possibly replace it with another toothed wheel R1* adapted to achieve a new transmission ratio in the first reduction stage ST1.

The present invention thus aims to eliminate the backlash between the toothed wheel R1 and the shaft SH2 onto which it is keyed, backlash which, especially in case of precision gearmotors, causes many problems.

Furthermore, the device object of the present invention ensures at the same time an easy assembly/disassembly of the toothed wheel R1 onto/from the corresponding shaft SH2, to obtain the required transmission ratio in the first transmission stage ST1 according to the customer's needs.

Figure 4 shows an exploded view of an innovative device 20 for eliminating backlash in the reducer 10.

Specifically, the present device 20 intervenes where the kinematic chain is particularly 'sensitive' to the presence of undesired backlash. Therefore, the device 20 permanently eliminates the backlash which exists between the toothed wheel R1 and the corresponding shaft SH2 due to the presence of the tongue LNG1.

Furthermore, the present device allows to 'recover' the backlash gradually should, for example, the sides of the tongue LNG1 wear in time.

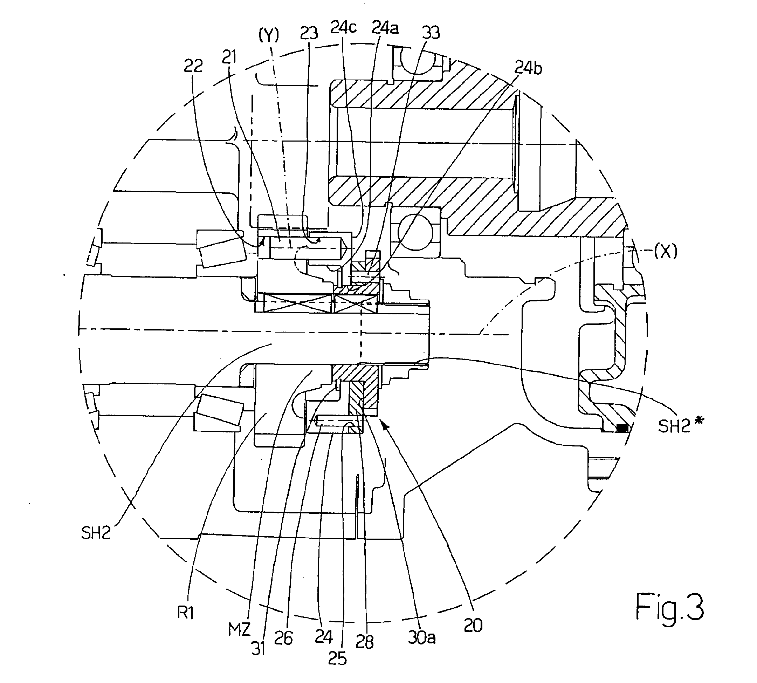

As shown in figures 3, 4, the device 20 includes in sequence a pair of pins 21.

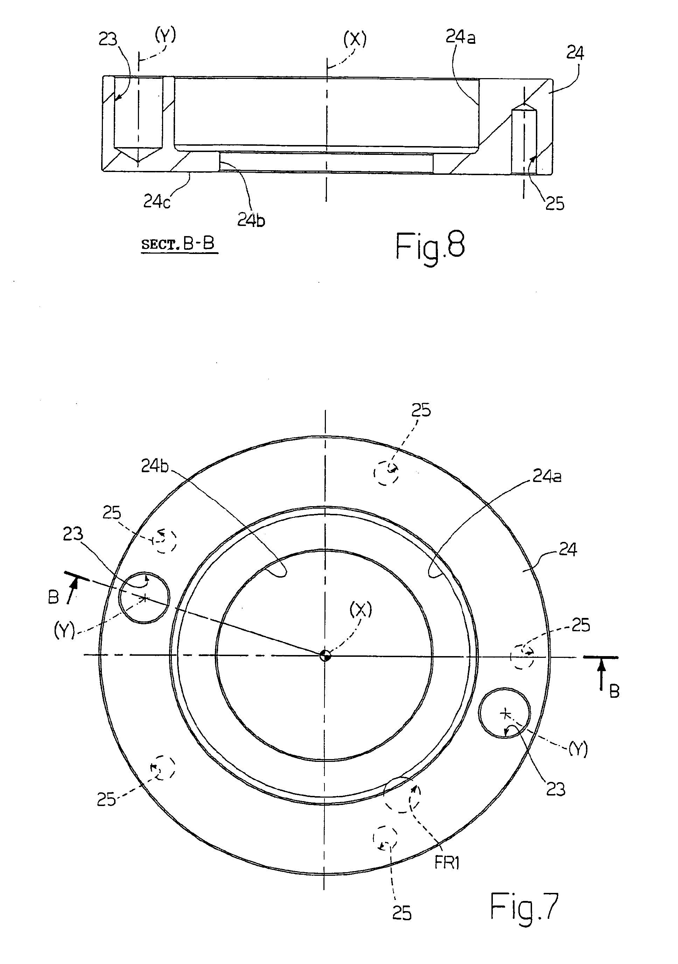

In use, one end of each pin 21 is driven into a corresponding through hole 22 (figures 5, 6) made in the toothed wheel R1, having a longitudinal axis (Y) parallel to a longitudinal symmetry axis (X) of the shaft SH2. Furthermore, the other end of each pin 21 is inserted into a corresponding blind hole 23 made in an essentially 'cup'-shaped cylindrical bushing 24 (figures 7, 8); in use, each through hole 22 is aligned with the corresponding blind hole 23 according to the axis (Y).

As shown in greater detail in figure 3, the hub MZ is overhanging with respect to the rest of the toothed wheel R1 and, in use, is accommodated in a concavity 24a of the cylindrical bushing 24. The cylindrical bushing 24 further provides a circular opening 24b which is coaxial in use to the axis (X).

As shown in figures 3, 4, 7, 8, five blind holes 25 (only one of which can be seen in the section B-B in figure 8) and a blind hole FR1 for certain functions which will be explained hereinafter (see below) are made on one face 24c of the cylindrical bushing 24c.

In turn, each blind hole 25 accommodates a first portion of a pin 26 (figure 4).

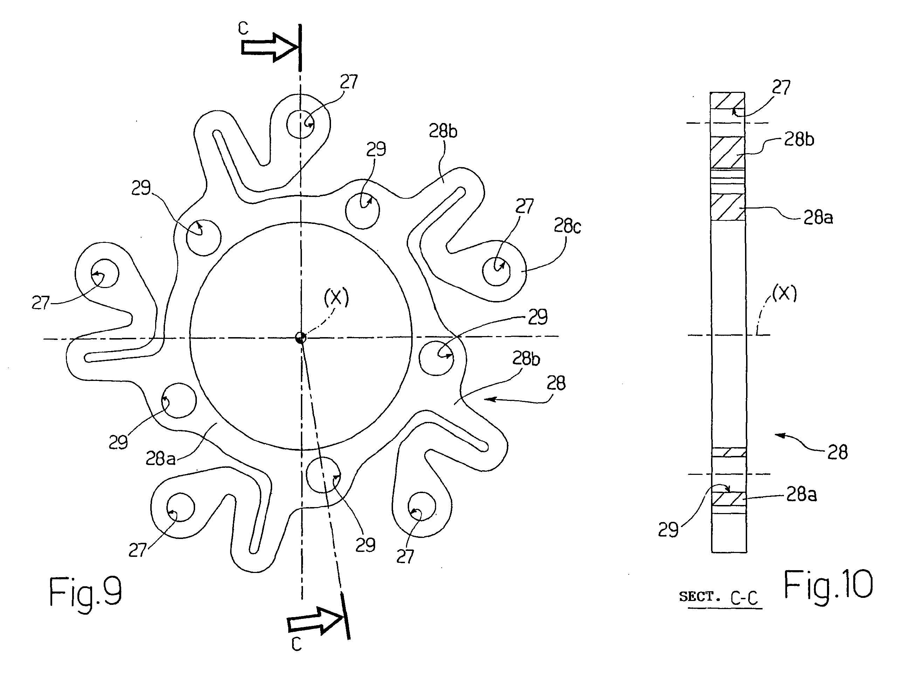

A second portion of each pin 26 is inserted in use into a corresponding eyelet 27 of an elastic member 28 (preferably, but not necessarily made of harmonic spring steel) shown in greater detail in figures 9, 10.

The elastic member 28 includes an essentially annular central body 28a on which five eyelets 29 are made for certain purposes which will be seen below.

Five legs 28b having an essentially wavy shape depart from the central body 28a. One of the aforesaid eyelets 27 is on each free end 28c of each leg 28b.

As can be inferred by observing the figure 9, the five eyelets 27 on the legs 28b are offset with respect to the five eyelets 29 on the central body 28a.

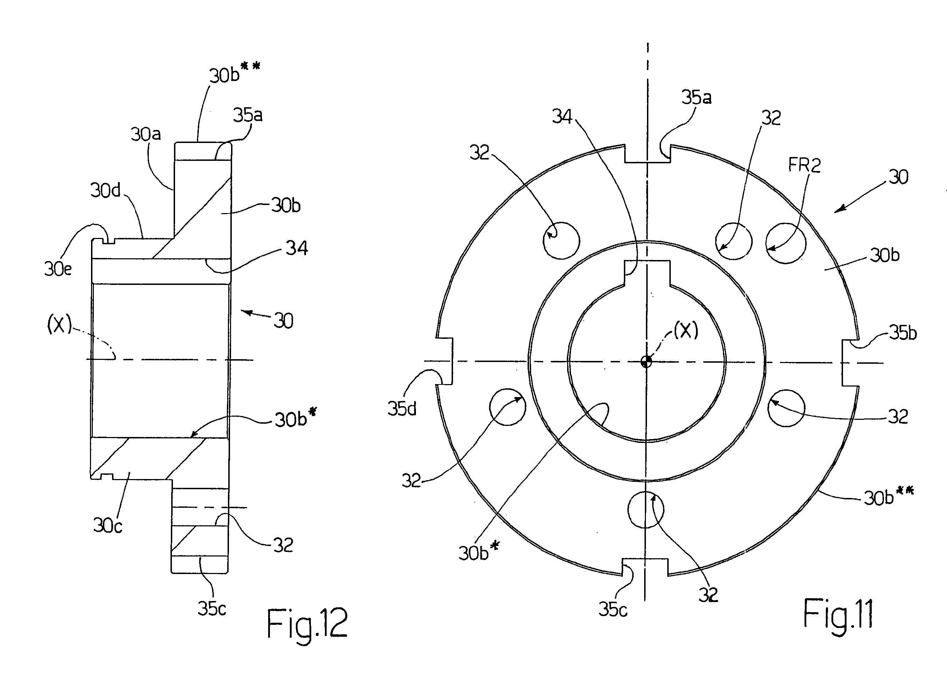

As specifically shown in figures 3, 4, the elastic member 28 is mounted, in use, on the shaft SH2 between the previously mentioned face 24c of the bushing 24 and a face 30a of a hub 30, shown in greater detail in figures 11, 12.

With reference to figures 11, 12, it is worth noting that the hub 30 includes a ring 30b which is integral with a cylindrical element 30c overhanging from the previous mentioned surface 30a. On an external surface 30d of the cylindrical element 30c there is a groove 30e, which accommodates a Seeger ring 31 in use (figures 3, 4).

Five through holes 32 are made in the ring 30b (figures 11, 12). Furthermore, a through hole FR2 is made in the ring 30b for certain purposes which will be specified in greater detail hereinafter (see below).

A first portion of a pin 33 is inserted into each hole 29 of the elastic member 28 (Figures 3, 4), while a second portion of the same pin 33 is inserted into a corresponding through hole 32 made in the ring 30b (figures 11, 12).

As shown in greater detail in figure 11, the ring 30b is defined by an internal circumference 30b* and by an external circumference 30b**.

A cavity 34 for a tongue LNG2 is obtained on the internal circumference 30b* (figure 4), while four slots 35a, 35b, 35c, 35d are made on the external circumference 30b**, reciprocally at 90°, for certain purposes which will be explained below.

In other words, the elastic member 28 is fixed on one side to the face 24c of the bushing 24 (in turn integral with the toothed wheel R1 by means of the two pins 21) by means of the pins 26 inserted into the eyelets 27, while, on the other side, the elastic member 28 is fixed to the hub 30 by means of the pins 33, each inserted into an eyelet 29 of the elastic member 28 itself, and in a through hole 32 of the ring 30b of the hub 30.

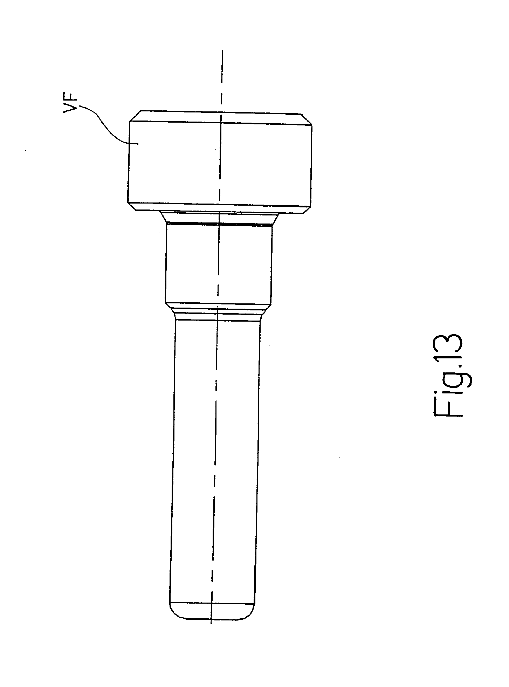

A retaining screw VF is used, as shown in figure 4 and figure 13 (not scaled), if the device 20 is pre-assembled in a kit in which the elastic member 28 is pre-tensioned. As we will see in the part of the present description addressed to the description of the assembly of the device 20, the retaining screw VF is inserted into the through hole FR2 of the hub 30 and in the blind hole FR1 of the bushing 24 which are reciprocally aligned after the elastic member 28 has been pre-tensioned.

As we will see in greater detail below, the insertion of the retaining screw VF into the through holes FR2 and FR1 is required to maintain the pre-tensioning of the elastic member 28 (see below).

For completion, a thrust block 36 and a fastening ring nut 37 screwed onto a free threaded end SH2* of the shaft SH2 are provided to 'sandwich' all the elements belonging to the device 20 onto the toothed wheel R1.

The device 20 object of the present invention may be supplied in the form of a previously prepared kit.

The kit consists, from left to right (see figures 3, 4), of the following 'sandwiched' elements not yet inserted onto the shaft SH2:
- the Seeger ring 31;
- the cylindrical bushing 24;
- the pins 26;
- the elastic member 28;
- the pins 33; and
- the hub 30.

The pins 26 and 33 are inserted into the corresponding holes as previously explained.

A method including the following steps may be defined for installing the device 20:
(a) inserting a specific key into the pair of slots 35a, 35b, 35c, 35d made on the external circumference 30b** of the hub 30 and rotating the hub 30 itself with respect to the held bushing 24;
(b) elastically loading the elastic member 28 arranged between the bushing 24 and the hub 30; furthermore, during the rotation of the hub 30 with respect to the bushing 24 when the through hole FR2, provided on the hub 30, is aligned with the hole FR1 made in the cylindrical bushing 24, the retaining screw VF is inserted into the two holes FR2, FR1, thus actually locking the relative position between the hub 30 and the bushing 24; the elastic member 28 remains stressed;
(c) inserting the device 20 onto the shaft SH2 onto which the toothed wheel R1 is keyed;
(d) rotating the whole device 20 until a cavity 34 provided on the hub 30 is aligned with the cavities 12, 13 in relation to the tongue LNG1 fastening the toothed wheel R1 onto the shaft SH2;
(e) pushing the device 20 towards the toothed wheel R1 and fixing it to the toothed wheel R1 itself by means of the two pins 21;
(f) inserting the tongue LNG2 into the cavities 12, 34 thus keying the whole device 20 onto the shaft SH2;
(g) removing the retaining screw VF, while the thrust block 36 and the fastening ring nut 37 are inserted onto the shaft SH2; and
(h) screwing the fastening ring nut 37 to a free threaded end SH2* of the shaft SH2 for 'sandwiching' all the elements belonging to the device 20 onto the toothed wheel R1.

An elastic torque thus originates on the cylindrical bushing 24 and then on the toothed wheel R1 and on the tongue LNG1 which is pressed onto a side of the cavities 12, 22 thereof, while again due to the same elastic torque, the tongue LNG2 is pushed into the cavities 12 and 34 on the side opposite to that onto which the tongue LNG1 presses.

It is obvious that without departing from the scope of the present invention, the single elements included in the device 20 can be mounted by an operator one at a time onto the shaft SH2, instead of providing the device 20 in the form of a pre-formed kit as previously described.

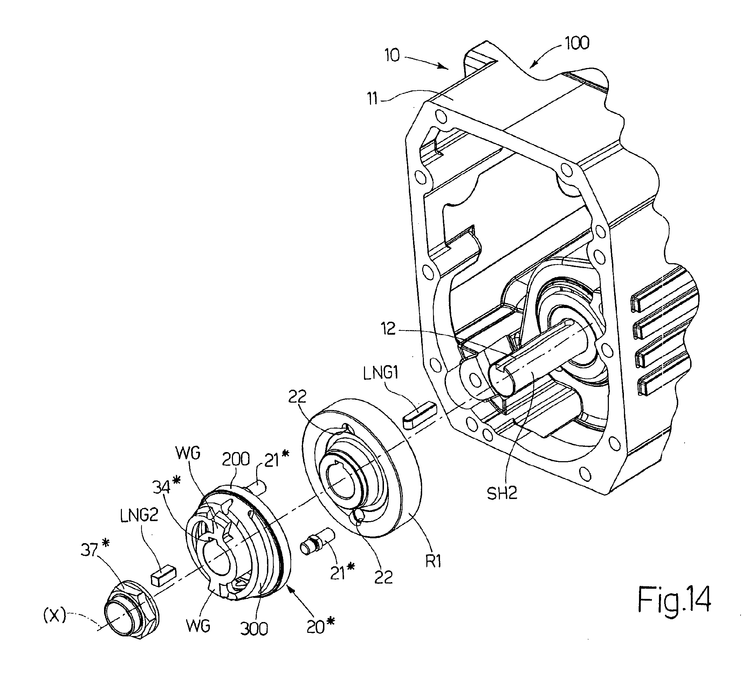

Figures 14, 15, 16 show a further simplified embodiment with respect to that described with reference to figures 1-13.

In the embodiment shown in figures 14, 15, 16 the elements equal or similar to those of the embodiment described with reference to figures 1-13 are numbered in the same manner.

As in the embodiment shown in figures 1-13, in this new embodiment shown in figures 14, 15, 16 the toothed wheel R1 is again keyed onto the shaft SH2 by means of the usual tongue LNG1 inserted into the cavity 12.

In this second embodiment of the invention, the device 20 for eliminating the backlash in the reducer has been replaced by a simply constructed device 20* which is easier to be assembled as compared to the device 20 itself.

It can be noted that the following elements have been combined inside the device 20*:
- the cylindrical bushing 24;
- the elastic member 28;
- the hub 30; and
- the pins 33.

The device 20*, as shown in figures 14, 15, 16, is a single block including a first ring portion 200. Two threaded holes 23* adapted to accommodate a threaded end of a corresponding pin 21*, the longitudinal axis of which is parallel to the longitudinal symmetry axis (X) of the shaft SH2, are made on a front face 200A of the first ring portion 200.

In use, the other end of each pin 21* is inserted into a corresponding through hole 22 which crosses the toothed wheel R1 to fix the device 20*, specifically the first portion 200 thereof, onto the toothed wheel R1 itself.

The device 20* further includes a second coiled portion 300 which includes, in turn, at least a first turn 310 and a second turn 320.

A first peripheral slot INT1 parallel to the axis (X) is made on the peripheral surface of the first turn 310. Similarly, a second peripheral slot INT2, also parallel to the axis (X) but offset with respect to the first peripheral slot INT1 when the second coiled portion 300 has not yet stressed during the step of assembling (see below), is provided also on the second turn 320.

The second coiled portion 300 consists of a very resistant but elastic material (e.g. spring steel) and may be advantageously enbloc constructed with the first portion 200.

As shown in particular in figure 14, a cavity 34*, adapted to accommodate in use the tongue LNG2 to be inserted also into the cavity 12 made in the shaft SH2, is made within the second turn 320.

The second turn 320 further includes means which allow the operator to easily rotate the second coiled portion 300 during the step of assembling (see below).

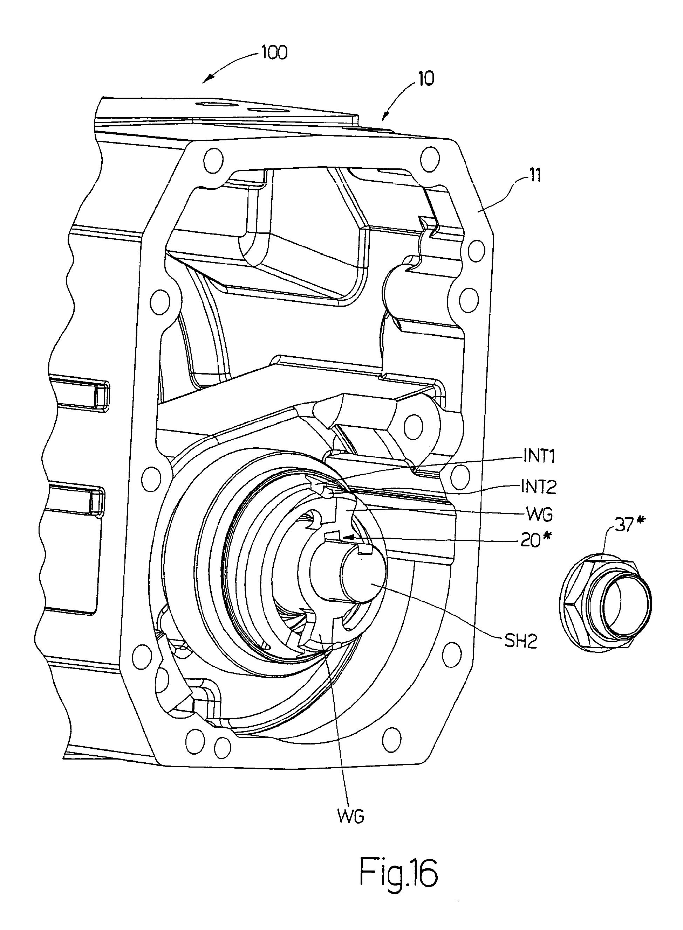

In this case, as shown in figures 14, 16, such means are represented by two overhanging fins WG which allow the operator to rotate the second coiled portion 300 by means of an appropriate 'fork'-shaped tool (not shown, see below).

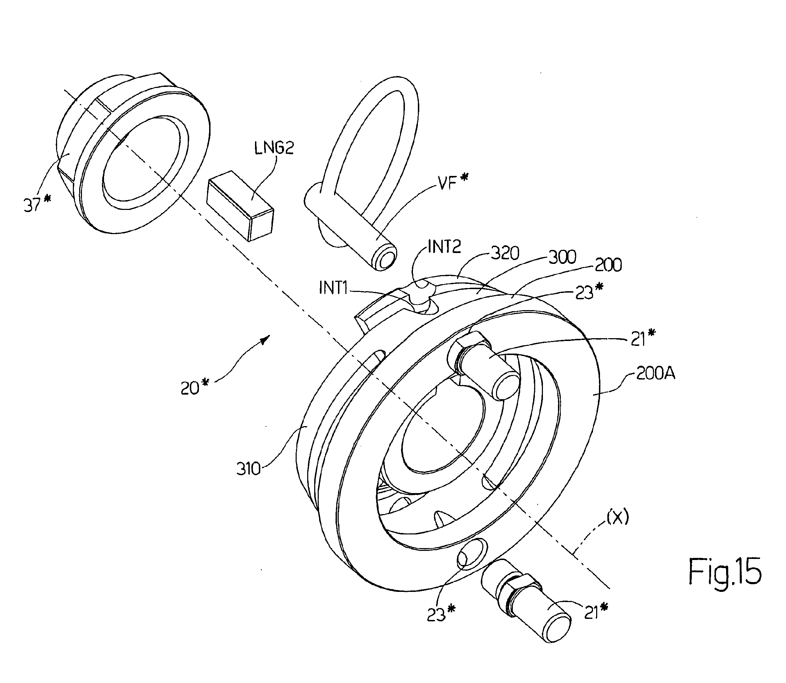

A method consisting of the following steps may be defined for installing the device 20*:
(a) rotating the second turn 320 with respect to the first held turn 310 and to the first held part 200; furthermore, during the rotation of the second turn 320 with respect to the first turn 310, when the slot INT2, provided on the second turn 320, is aligned with the slot INT1 made on the first turn 310, the operator inserts a retaining screw VF* (figure 15) into the two reciprocally aligned slots INT1, INT2 thus actually locking the relative position between the two turns 310, 320; therefore, the elastic member consisting of the second part 300 remains elastically stressed;
(b) inserting the device 20* on the shaft SH2 onto which the toothed wheel R1 is keyed;
(c) rotating the entire device 20* until the cavity 34* provided on the second turn 320 is aligned with the cavity 12 which is on the shaft SH2;
(d) pushing the device 20* towards the toothed wheel R1 and fixing it to the toothed wheel R1 itself by means of the two pins 21*;
(e) inserting the tongue LNG2 into the cavities 12, 13, 34* by keying the whole device 20* onto the shaft SH2;
(f) removing the retaining screw VF*, while a fastening ring nut 37* is inserted onto the shaft SH2; and
(g) screwing the fastening ring nut 37* onto a free threaded end SH2* of the shaft SH2 for 'sandwiching' all the elements belonging to the device 20* onto the toothed wheel R1.

An elastic torque thus originates between the second portion 300 and the first portion 200 (which is fixed to the toothed wheel R1) and then on the toothed wheel R1 and on the tongue LNG1 which is pressed onto a side of the cavities 12, 13, while again due to the same elastic torque, the tongue LNG2 is pushed into the cavities 12 and 34* on the side opposite to that onto which the tongue LNG1 presses.

The advantages of the device for eliminating backlash in a reducer which is the object of the present invention are the following:
- a complete elimination of backlash between a toothed wheel and the shaft onto which it is keyed; furthermore, the present device allows to progressively 'recover' backlash should, for example, the sides of the fastening tongue of the toothed wheel on the corresponding shaft wear in time; and
- an easy assembly/disassembly of the toothed wheel onto/from the corresponding shaft to obtain the required transmission ratio in a transmission stage according to customer's needs.

## Claims

1. A device (20; 20*) for eliminating backlash in a reducer (10); device (20) **characterized in that** it includes:
- annular means (24; 200) adapted to be integral with a toothed wheel (R1) keyed onto a shaft (SH2) having a longitudinal symmetry axis (X); said annular means (24; 200) being fixed to elastic means (28; 300);
- a pre-loading element (30; 300), also fixed to said elastic means (28; 300), adapted to rotate about said axis (X) with respect to said annular means (24; 200) so as to elastically pre-load said elastic means (28; 300); and
- locking means (VF; VF*) of the angular position of the pre-loading element (30; 300).

2. A device (20), as claimed in claim 1, **characterized in that** it includes:
- a bushing (24) adapted to be integral with a toothed wheel (R1) keyed onto a shaft (SH2) having a longitudinal symmetry axis (X); said bushing (24) being fixed to an elastic member (28);
- a hub (30), also fixed to said elastic member (28), adapted to rotate about said axis (X) with respect to said bushing (24) so as to elastically pre-load said elastic member (28); and
- locking means (VF) of the angular position of the hub (30) with respect said bushing (24).

3. A device (20*), as claimed in claim 1, **characterized in that** it includes:
- a first annular part (200) adapted to be integral with a toothed wheel (R1) keyed onto a shaft (SH2) having a longitudinal symmetry axis (X); said first annular part (200) being fixed to a second elastic part (300);
- a pre-loading element (30), including said second elastic part (300), adapted to rotate about said axis (X) with respect to said first annular part (200) so as to elastically pre-load said second elastic part (300); and
- locking means (VF*) of the angular position of the pre-loading element (300) with respect to said annular means (200).

4. A device (20), as claimed in claim 2, **characterized in that** said elastic member (28) is positioned between said bushing (24) and said hub (30).

5. A device (20), as claimed in claim 4, **characterized in that** said elastic member (28) includes an essentially annular central body (28a), on which there are first eyelets (29); legs (28b) having an essentially wavy shaped departing from the central body (28a); an eyelet (27) of a plurality of second eyelets (27) being at each free end (28c) of each leg (28b).

6. A device (20), as claimed in claim 5, **characterized in that** the second eyelets (27) on the legs (28b) are offset with respect to the first eyelets (29) which are on the central body (28a).

7. A device (20), as claimed in any one of the claims 4-6, **characterized in that** said elastic member (28) is fixed to said bushing (24) by means of a first plurality of pins (26), and **in that** said elastic member (28) is fixed to said hub (30) by means of a second plurality of pins (33).

8. A device (20), as claimed in any one of the preceding claims 2, 4-7, **characterized in that** when said device (20) is pre-assembled in a kit, the elastic member (28) is pre-tensioned by means of a suitable key and **in that**, to maintain the pre-tensioning of the elastic member (28), retaining means (VF) are inserted into a through hole (FR2) made in the hub (30) and into a blind hole (FR1) made in the bushing (24).

9. A device (20), as claimed in claim 8, **characterized in that** in use said device (20) is fixed to the toothed wheel (R1) by means of pins (11) and to the shaft (SH2) by means of fastening means (LNG2).

10. A device (20), as claimed in claim 9, **characterized in that** fastening means (36, 37) are used to complete the 'sandwiching' operation of the device (20) itself onto the toothed wheel (R1).

11. A reducer (10) **characterized in that** it includes at least one device (20) as claimed in any one of the claims 1-10.

12. A gearmotor (100) **characterized in that** it includes at least an electric motor mechanically coupled to a reducer (10) as claimed in claim 11.

13. A method for installing a device (20) as claimed in any one of the claims 1, 2, 4-12; the method is **characterized in that** it includes the following steps:
(a) inserting an appropriate key into a pair of slots (35a, 35b, 35c, 35d) made on the external circumference (30b**) of a hub (30) and rotating the hub (30) itself with respect to a held bushing (24);
(b) elastically loading an elastic member (28) arranged between the bushing (24) and the hub (30); furthermore, during the aforesaid rotation of the hub (30) with respect to the bushing (24), when a hole (FR2) provided in the hub (30), is aligned with a hole (FR1) made in the cylindrical bushing (24), a retaining screw (VF) is inserted into the two holes (FR2, FR1), thus actually locking the relative position between the hub (30) and the bushing (24); the elastic member (28) remaining stressed;
(c) inserting the device (20) onto a shaft (SH2) onto which a toothed wheel (R1) is keyed;
(d) rotating the whole device (20) until a cavity (34) provided in the hub (30) is aligned with the cavities (12, 13) in relation to a first fastening tongue (LNG1) of the toothed wheel (R1) onto the shaft (SH2).

14. A method as claimed in claim 13, **characterized in that** it further includes the following steps of:
(e) pushing the device (20) towards the toothed wheel (R1) and fixing the device (20) to said toothed wheel (R1) by means of coupling means (21);
(f) inserting a second tongue (LNG2) into the cavities (12, 34) thus keying the whole device (20) onto the shaft (SH2);
(g) removing the retaining element (VF), while fastening means (36, 37) are inserted onto the shaft (SH2); and
(h) fixing the fastening means (36, 37) to the shaft (SH2) for 'sandwiching' (R1) all the elements belonging to the device (20) onto the toothed wheel.

15. A device (20*), as claimed in claim 3, **characterized in that** said second elastic part (300) includes a first turn (310) and a second turn (320); a first peripheral slot (INT1) parallel to the axis (X) being made on the peripheral surface of the first turn (310), while on the second turn (320) a second peripheral slot (INT2) being provided, which slot is also parallel to the axis (X) but offset with respect to the first peripheral slot (INT1) when the second coiled portion (300) has not yet been stressed during the step of assembling.

16. A device (20*), as claimed in claim 15, **characterized in that** a cavity (34*) adapted to accommodate in use a tongue (LNG2) is made within the second turn (320).

17. A reducer (10) **characterized in that** it includes at least one device (20*) as claimed in any one of the claims 1, 3, 15, 16.

18. A gearmotor (100) **characterized in that** it includes at least one electric motor mechanically coupled to a reducer (10) as claimed in claim 17.

19. A method for installing a device (20*) as claimed in claim 16; the method is **characterized in that** it includes the following steps:
(a) rotating the second turn (320) with respect to the first held turn (310) and to the first held part (200); furthermore, during the rotation of the second turn (320) with respect to the first turn (310), when the slot (INT2), provided on the second turn (320), is aligned with the slot (INT1), made on the first turn (310), the operator inserts a retaining screw (VF*) into the two reciprocally aligned slots (INT1, INT2), thus actually locking the relative position between the two turns (310, 320); therefore, the elastic member consisting of the second part (300) remains elastically stressed;
(b) inserting the device (20*) onto the shaft (SH2) onto which the toothed wheel (R1) is keyed;
(c) rotating the whole device (20*) until the cavity (34*) provided on the turn (310) is aligned with the cavity (12) which is on the shaft (SH2);
(d) pushing the device (20*) towards the toothed wheel (R1) and fixing it to the toothed wheel (R1) itself by means of the two pins (21*);
(e) inserting the tongue (LNG2) into the cavities (12, 13, 34*) thus keying the whole device (20*) onto the shaft (SH2);
(f) removing the retaining screw (VF*).
